Europäisches Patentamt

European Patent Office

Office européen des brevets

(19)

(11) Veröffentlichungsnummer: **0 222 699 B1**

## (12) EUROPÄISCHE PATENTSCHRIFT

(45) Veröffentlichungstag der Patentschrift: **18.12.91**

(51) Int. Cl.⁵: **A47J 36/02, A47J 27/00**

(21) Anmeldenummer: **86810482.9**

(22) Anmeldetag: **28.10.86**

(54) Kochgefäss.

(30) Priorität: **31.10.85 CH 4682/85**

(43) Veröffentlichungstag der Anmeldung:
**20.05.87 Patentblatt 87/21**

(45) Bekanntmachung des Hinweises auf die
Patenterteilung:
**18.12.91 Patentblatt 91/51**

(84) Benannte Vertragsstaaten:
**AT BE CH DE ES FR GB GR IT LI LU NL SE**

(56) Entgegenhaltungen:
EP-A- 0 036 978    EP-A- 0 111 867
CH-A- 604 643     DE-B- 1 083 999
FR-A- 1 010 574    FR-A- 2 290 125
FR-A- 2 437 184    NL-A- 7 307 371

(73) Patentinhaber: **Heinrich Kuhn Metallwarenfabrik Aktiengesellschaft**

**CH-8486 Rikon(CH)**

(72) Erfinder: **Kuhn, Jacques**
**Mühleweg 3**
**CH-8486 Rikon(CH)**

(74) Vertreter: **White, William et al**
**Patentanwalts-Bureau Isler AG Postfach 6940**
**CH-8023 Zürich(CH)**

### Beschreibung

Die vorliegende Erfindung betrifft ein Kochgefäss gemäss dem Oberbegriff des unabhängigen Patentanspruchs 1.

Ein derartiges doppelwandiges Kochgefäss ist aus der DE-C-2 734 733 bekannt. Dieses Kochgefäss hat sich sehr bewährt. Es ist sehr gut geeignet zum Kochen auf offener Flamme und konventionellen Elektroherden mit metallischer oder keramischer Abdeckung. Dank seiner Doppelwandigkeit wird beim Kochen ein hoher thermischer Wirkungsgrad erzielt und die Speisen bleiben lange heiss. Die Metallplatte verleiht dem Boden eine hohe Stabilität, gute Wärmeleitung über die ganze Bodenfläche und dient als Wärmespeicher für die Warmhaltung der Speisen über längere Zeit.

In neuerer Zeit sind Induktionskochherde bekannt geworden, bei welchen unter der Kochgefässauflage eine Induktionsspule angeordnet ist. Diese wird heute mit einer Frequenz von beispielsweise 25 kHz gespeist. Für solche Induktionskochherde sind Kochgefässe aus Eisenblech oder -guss mit oder ohne Korrosionsschutz oder Kochtöpfe aus einem Verbundmaterial mit einer Schicht aus ferromagnetischem Material und aussenliegender Schicht aus nichtrostendem Material geeignet. Induktionskochherde haben bezüglich des Kochgutes einen hohen thermischen Wirkungsgrad, und sie lassen sich sehr gut regulieren, weil, im Gegensatz zu konventionellen Elektroplatten, praktisch kein Wärmespeicher zwischen der elektrischen Energiespeisung und dem Kochgefäss vorhanden ist. Die Wärme wird direkt im ferromagnetischen Teil des Kochtopfes durch Wirbelströme erzeugt, Induktionskochherde vereinigen gewissermassen die Vorzüge des Gaskochens mit jenen konventioneller Elektrokochherde.

Die bekannten Kochgefässe für Induktionskochherde haben allerdings verschiedene Nachteile: Kochgefässe aus Eisenblech oder -guss haben wegen der gegenüber Kupfer oder Aluminium schlechteren Wärmeleitfähigkeit innerhalb der Bodenpartie eine schlechte Wärmeverteilung. Bei thermischer Belastung deformieren sich die Böden in einem Masse, dass der Wärmeübergang zwischen Platte und Kochgefäss, insbesondere bei Verwendung auf konventionellen elektrischen Kochherden mit metallischer und keramischer Abdeckung ungünstig ist. Ausserdem müssen Kochgefässe aus Eisenblech zum Schutz gegen Rostbildung bei Lagerung und Gebrauch geschützt sein, sei es durch emaillierten, galvanischen Lack-,Oel-oder Fettoberflächenschutz. Bei Verbundmaterialien ist die Stirnfläche am Rand korrosionsgefährdet, weil die ferromagnetische Schicht freigelegt ist, insbesondere wenn die Kochtöpfe in Geschirrspülmaschinen gereinigt werden. Email ist an diesem Rand zudem schlagempfindlich, so dass dieser Rand durch Metallauftrag oder Schutzstreifen geschützt werden muss.

Die EP-A-111 867 zeigt ein Kochgefäss für Verwendung auf Induktionskochherden. Dabei ist ein Kochtopf aus rostfreiem Stahl an seinem Boden mit einer Wärmeverteilplatte aus Kupfer versehen, an deren Unterseite eine Aussenplatte aus magnetisierbarem Eisen angeschweisst ist, die beispielsweise beidseits mit einer Schicht aus rostfreiem Stahl bedeckt sein kann. Um zu verhindern, dass das rostende Weicheisen von aussen sichtbar ist, wurde vorgeschlagen, die Randzone der Aussenplatte nach oben umzubiegen und in die Wärmeverteilplatte einzusetzen. Auch ist vorgesehen, die dreischichtige Aussenplatte auf der Aussenseite des Kochtopfes anzuschweissen, so dass schliesslich ein vierschichtiger Kochtopf entsteht. Dies löst jedoch nicht das Problem der Formstabilität der Randpartie für einen guten Dichtungseffekt zwischen Kochtopf und Deckel.

Die Aufgabe der vorliegenden Erfindung besteht darin, einen Universal-Kochtopf zu schaffen, der sich bei induktiver, bei konventioneller elektrischer Beheizung und bei Beheizung mit offener Flamme optimal eignet und bei dem die Formstabilität derart ist, dass eine gute Dichtung zwischen Topf und Deckel bewirkt werden kann.

Erfindungsgemäss wird dies durch die Merkmale im kennzeichnenden Teil des unabhängigen Patentanspruchs 1 erreicht.

Nachfolgend werden Ausführungsbeispiele der Erfindung anhand der Zeichnung erläutert. Darin zeigt:

Fig. 1 einen Teilquerschnitt durch ein Kochgefäss, mit Deckel und Untersatz in gedehnter Darstellung,

Fig. 2 eine Schnittansicht beim Rand in vergrössertem Massstab, gemäss Ausschnitt II in Fig. 1,

Fig. 3 eine Schnittansicht beim Bodem in vergrössertem Massstab gemäss Ausschnitt III in Fig. 1,

Fig. 4 eine Schnittansicht ähnlich Fig. 2 in einer zweiten Ausführungsform des breiten Randes.

Fig. 5 eine Schnittansicht gemäss Fig. 4 in einer weiteren Form zur Abdeckung der ferromagnetischen Schicht.

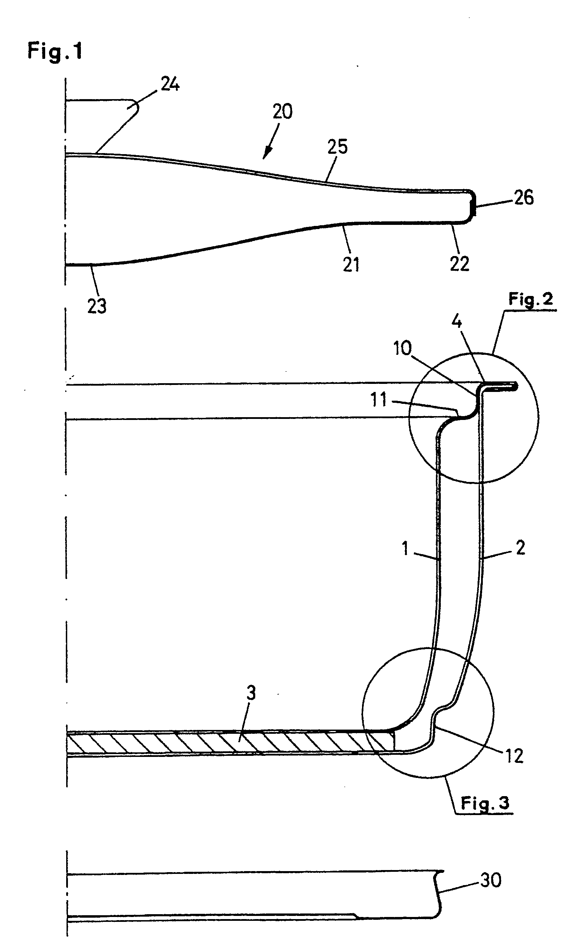

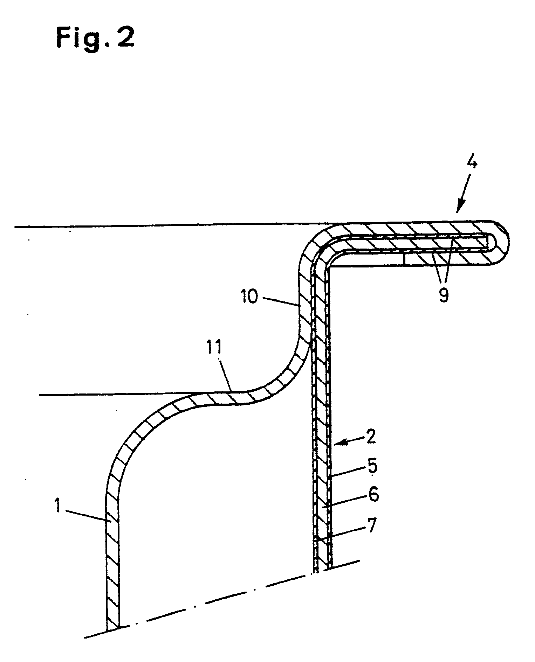

Bei dem in Fig. 1 bis 3 dargestellten Kochgefäss ist der Topf doppelwandig und hat eine innere Wand 1 und eine äussere Wand 2. Im Boden ist zwischen der inneren Wand 1 und der äusseren Wand 2 eine gut wärmeleitende Platte 3 aus zum Beispiel Aluminium angeordnet und sowohl mit der inneren Wand 1 als auch mit der äusseren Wand 2 verbunden. Damit ist eine gute Wärmeübertragung zwischen äusserer Wand 2 und innerer Wand 1 und gleichmässig Wärmeverteilung über die ganze Bodenfläche gewährleistet.

Die äussere Wand 2 besteht aus einem Verbundmaterial und umfasst daher eine Aussenschicht 5 aus z.B. rostfreiem Stahl, eine Mittelschicht 6 aus einem ferromagnetischen Material wie z.B. Eisen und eine Innenschicht 7 aus z.B. rostfreiem Stahl. Die innere Wand 1 ist am Topfrand 4 um die äussere Wand 2 gebördelt und mittels einer Schweissung 9 mit dieser gasdicht verbunden. Damit ist die ferromagnetische Mittelschicht 6 stirnseitig am Rand 4 gegen Sicht und Korrosion geschützt und zudem die Randpartie verstärkt und gratfrei gemacht. Statt der Schweissnaht 9 ist auch eine Lötverbindung oder eine Verklebung denkbar.

Die äussere Wand 2 ist, ausgehend von landesüblichen Materialien, z.B. unter 1,2 mm dick, vorzugsweise etwa 0,8 mm. Dies hat den Vorteil, dass wenig Wärme in die äussere aufrechte Partie eingeleitet wird. Dabei sind die beiden Schichten 5, 7 aus rostfreiem Stahl unter 0,2 mm dick. Damit wird ein hoher Wirkungsgrad erzielt.

Weil die ferromagnetische Mittelschicht 6 relativ dünn ist, könnten sich durch die Eindringtiefe des Wechselfeldes Nebenschlüsse ergeben, wenn diese Schicht direkt mit dem elektrisch gut leitenden Material z.B. Aluminium aus der Platte 3 verbunden wäre. Dies würde die von einem Induktionskochherd übertragbare Leistung erheblich reduzieren. Die Innenschicht 7 der äusseren Wand 2 aus rostfreiem Stahl zwischen der Platte 3 und der Mittelschicht 6 aus ferromagnetischem Material verhindert dies weitestgehend, so dass bei Induktionskochherden ein hoher Wirkungsgrad erzielt werden kann. Indem die dicke Platte 3 die Wärme gut leitet, ist die Temperaturverteilung über die ganze Bodenfläche gut, und gleichzeitig wird bei thermischer Belastung eine hohe Stabilität erreicht. Das Kochgefäss ist daher sowohl für induktive, als auch für die genannten konventionellen elektrischen Kochherde und Beheizung mit offener Flamme bestens geeignet.

Die innere Wand 1 hat im Bereich des Topfrandes 4 eine nach innen abgesenkte tiefere Ringfläche 11 mit einer senkrechten Wandpartie 10. Der Deckel 20 (Fig. 1) besteht ebenfalls aus zwei Wänden, nämlich einer inneren Deckelwand 21 und einer äusseren Deckelwand 25. Am Umfangsrand 26 überlappen sich die beiden Deckelwände 21, 25 wenigstens auf einem Teil der aufrechten Wandpartie 26 und sind dort gasdicht miteinander verbunden. Dies kann ebenfalls mittels Schweissen, Löten oder Kleben gemacht sein. Die innere Deckelwand 21 hat umfangsseitig eine Auflagefläche 22 entsprechend der vertieften Ringfläche 11 der inneren Wand 1 des Topfes. Die Höhe der aufrechten Wandpartie 26 ist vorteilhafterweise wenigstens angenähert gleich wie die senkrechte Wandpartie 10 des Topfes vom umlaufenden Topfrand 4 zur Ringfläche 11.

Somit kann beim Spalt zwischen Topfrand 4 und äusserer Deckelwand 25 ein stufenloser Uebergang gebildet werden.

Die innere Deckelwand 21 ist von der Auflagefläche 22 gegen das Zentrum 23 hin konvex gewölbt und ebenso ist auch die äussere Deckelwand 25 innerhalb einer eher parallel zum Topfrand 4 angeordneten äusseren Zone konvex gewölbt und trägt im Zentrum einen Knopf 24 als Handgriff.

Der Vorteil dieser Anordnung ist offensichtlich. Wenn gekocht wird, entsteht Dampf im Topfinnern. Wenn die Kochtemperatur des Nahrungsmittels erreicht ist, fliesst der Dampf zwischen Ringfläche 11 und Auflagefläche 22 gepresst und kondensiert an der kühleren senkrechten Wandpartie 10 der inneren Wand des Topfes bzw. an der aufrechten Wandpartie 26 des Deckels 20. Das Kondensat läuft hinunter und gelangt zwischen Ringfläche 11 und Auflagefläche 22 und bildet eine Dichtung, solange kein Ueberdruck den durch die doppelwandige Ausbildung schweren Deckel 20 abzuheben vermag. Insbesondere beim Garvorgang bei Temperaturen unter der Siedetemperatur des Wassers wirkt sich diese Dichtung sehr vorteilhaft aus, indem damit keine Flüssigkeit in Form von Dampf austreten und dann verloren gehen kann, wodurch wasserarmes Kochen ermöglicht wird. Eine äusserst wichtige Voraussetzung dazu ist jedoch, dass die innere Schale des Topfes, die aus rostfreiem Stahl besteht und z.B. durch Tiefziehen gebildet wurde, formstabil ist. Dies kann auf einfachste Weise dadurch bewirkt werden, dass der Topfrand breit nach aussen ausladend geformt wird und in diesem Randbereich mit der äusseren Schale gasdicht verbunden ist; dieser Effekt wird noch durch die stufige Profilierung verstärkt.

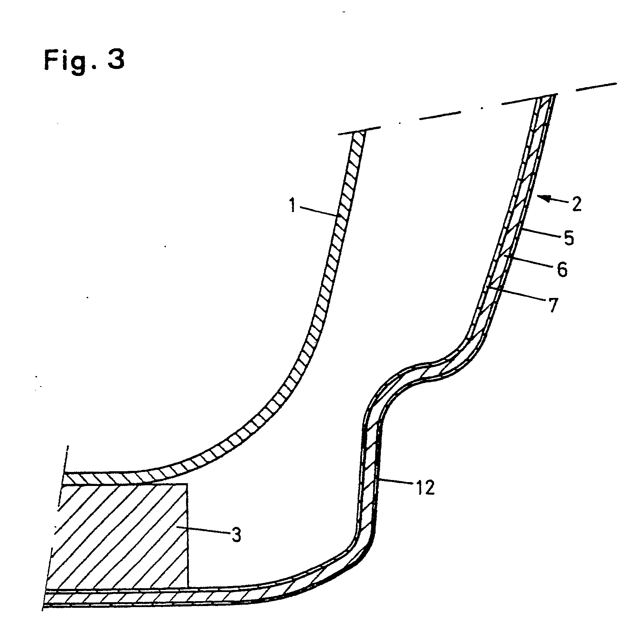

Die äussere Wand 2 des Topfes ist gegen den Boden hin ebenfalls stufenförmig ausgebildet (Fig. 1 und 3) und hat einen zylindrischen Abschnitt 12, auf welchen ein Untersatz 30 zur Wärmeisolation aufgesteckt werden kann. Der Untersatz 30 wird durch Klemmwirkung gehalten. Bei aufgesetztem Untersatz kann das Kochgefäss zum Warmhalten und Servieren der Speisen verwendet werden. Das Kochgefäss ist dann über seine gesamte Oberfläche doppelwandig ausgebildet und damit wärmeisoliert. Damit bleiben die Speisen lange warm. Auch wenn die Unterseiten des Bodens durch eine offene Flamme beschmutzt wäre, erlaubt der Untersatz ein Aufstellen des Kochgefässes ohne Verschmutzung auf einen Speisetisch.

Der Untersatz zur Wärmeisolation kann zur lösbaren Verbindung mit dem Kochgefäss auch Permanentmagnete aufweisen, die bei aufgesetztem Untersatz an der äusseren Wand 2 anliegen, wobei durch das verwendete Verbundmaterial mit einer ferromagnetischen Schicht eine Haftung bewirkt wird.

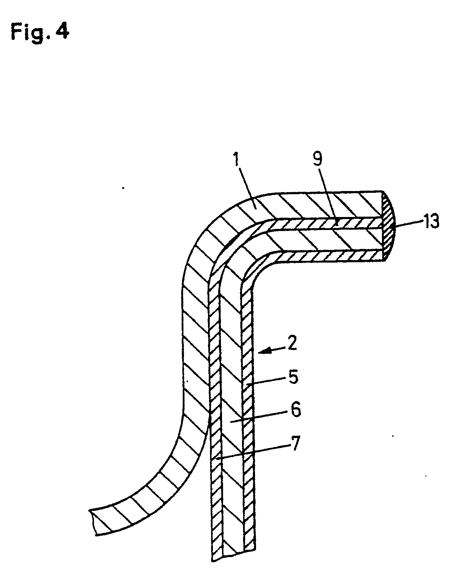

Bei der Ausführungsform nach Fig. 4 sind die innere Wand 1 und die äussere Wand 2 längs der Schweissnaht 9 aussenbündig abgeschnitten. Ein Ueberzug 13 schützt die ungeschützte Randpartie und damit besonders auch die ferromagnetische Schicht und verbindet die Innenwand 1 mit der äusseren Schicht 5 des Verbundmaterials. Ein solcher Ueberzug kann mit einem galvanischen Verfahren oder mittels Auftragsschweissung realisiert werden.

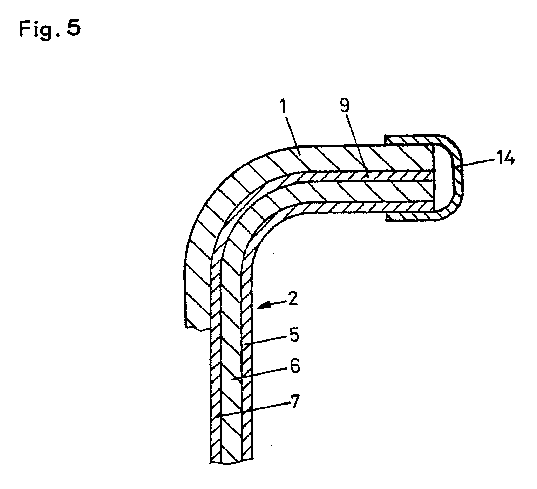

Die ungeschützte Randpartie gemäss Fig. 4 könnte auch gemäss Fig. 5 mittels einer Manschette 14 aus korrosionsfestem Material geschützt werden, welche Manschette am Rand durch z.B. Lötung, Schweissung oder Klebung befestigt ist.

**Patentansprüche**

1. Kochgefäss, insbesondere zur Verwendung auf Induktionsplatten zum Kochen, Warmhalten und Servieren, mit einem Topf mit innerer (1) und äusserer Wandung (2) je aus durchgehend geformten, gasdicht miteinander verbundenen Schalen, die in ihren aufrechten Partien im Abstand voneinander angeordnet sind und zwischen deren Bodenpartien eine wärmeleitende mit beiden Schalen wärmeleitend verbundene Platte (3) vorhanden ist und einem ebenfalls doppelwandig ausgebildeten Deckel (20) bei welchem Kochgefäss Topf und Deckel (20) im Berührungsgebiet stufig ausgebildet und einerseits mit einer vertieften Ringfläche (11) in der inneren Wandung (1) und komplementären Auflagefläche (22) des Deckels (20) zur Einbettung des Deckels (20) im Topf und andererseits mit einem rundum verbreiteten Rand (4) zur Formstabilisierung der Ringfläche versehen sind, dadurch gekennzeichnet, dass wenigstens die äussere Wand (2) des Topfes aus einem Verbundmaterial hergestellt ist, von dem wenigstens eine innere Schicht (6) aus ferromagnetischem Material besteht, und dass die innere Wand (1) und die äussere Wand (2) des Topfes verbreiterte, ohne Abstand aneinanderliegende Rönder (4) aufweisen, an denen sie miteinander gasdicht verbunden sind.

2. Kochgefäss nach Patentanspruch 1, dadurch gekennzeichnet, dass das Verbundmaterial dreischichtig ausgebildet ist und das ferromagnetische Material in der mittleren Schicht (6) beidseits durch eine Schicht (5, 7) aus nichtrostendem Material bedeckt ist.

3. Kochtopf nach Anspruch 1 oder 2, dadurch gekennzeichnet, dass die innere Wand (1) um die Stirnfläche der äusseren Wand (2) am oberen Rand (4) herum gebördelt ist.

4. Kochgefäss nach Anspruch 1 oder 2, dadurch gekennzeichnet, dass die Innenwand (1) längs des Randes (4) bündig mit der Aussenwand (2) ist, dass die innere Wand (1) mittels eines galvanischen Ueberzuges (13) mit der äusseren Wand (2) verbunden ist und dass bei dieser letztgenannten wenigstens die ferromagnetische Schicht (6) überdeckt ist.

5. Kochgefäss nach einem der Ansprüche 1 bis 4, dadurch gekennzeichnet, dass die Innenwand (1) längs des Randes (4) mit der Aussenwand (2) verschweisst, verlötet oder verklebt ist.

6. Kochgefäss nach einem der Ansprüche 1 bis 5, dadurch gekennzeichnet, dass die Wandstärke jeder der beiden genannten Schichten (5, 7) der äusseren Wand aus nichtrostendem Material höchstens 0,2 mm beträgt.

7. Kochgefäss nach einem der Ansprüche 1 bis 6, dadurch gekennzeichnet, dass am Boden Mittel (12) zum lösbaren Verbinden mit einem wärmeisolierenden Untersatz vorhanden sind.

8. Kochgefäss nach einem der Ansprüche 1 bis 7, dadurch gekennzeichent, dass die äussere Wand (2) am unteren Teil der aufrechten Partie eine umlaufende Einschnürung (12) für die Klemmhalterung eines eine Wärmeisolation bildenden Untersatzes (13) aufweist.

9. Kochgefäss nach einem der Ansprüche 1 bis 8, dadurch gekennzeichnet, dass die innere Wand (21) des Deckels (20) von der Auflagepartie (22) auf der vertieften Ringfläche (11) des Topfes gegen das Zentrum (23) hin konvex gewölbt ist.

10. Kochgefäss nach Anspruch 1 oder 2, dadurch gekennzeichnet, dass die Stirnseite an der Randpartie durch eine Manschette (14) aus rostfreiem Material abgedeckt ist.

11. Kochgefäss nach einem der Ansprüche 1 bis 8, gekennzeichnet durch einen wärmeisolierenden, mit Permanentmagneten zur Halterung am Gefäss mittels magnetischer Kräfte, versehenen Untersatz.

**Claims**

1. Cooking vessel, especially for use on induction plates for cooking, keeping hot and serving, with a pot having an inner (1) and an outer wall (2), each composed of continuously formed shells which are connected to one another in a gas-tight manner and in their vertical parts are arranged at a distance from one another, and between the bottom parts of which there is a heat-conducting plate (3) connected to the two shells in a heat-conducting manner, and with a likewise double-walled lid (20), in which cooking vessel the pot and the lid (20) are stepped in the cooking vessel the pot and the lid (20) are stepped in the contact zone and are provided, on the one hand, with a recessed annular surface (11) in the inner wall (1) and a matching bearing surface (22) of the lid (20) for embedding the lid (20) in the pot and, on the other hand, with a rim (4) widened all round for ensuring the dimensional stability of the annular surface, characterised in that at least the outer wall (2) of the pot is produced from a composite material, of which at least one inner layer (6) consists of ferromagnetic material, and in that the inner wall (1) and the outer wall (2) of the pot have widened rims (4) which are directly adjacent to one another, and by which they are connected to one another in a gas-tight manner.

2. Cooking vessel according to Patent Claim 1, characterised in that the composite material is composed of three layers, and the ferromagnetic material in the middle layer (6) is covered on both sides by a layer (5, 7) of rust-proof material.

3. Cooking pot according to Claim 1 or 2, characterised in that the inner wall (1) is flanged round the end face of the outer wall (2) at the upper rim (4).

4. Cooking vessel according to Claim 1 or 2, characterised in that the inner wall (1) is flush with the outer wall (2) along the rim (4), in that the inner wall (1) is connected to the outer wall (2) by means of electroplating (13), and in that in this outer wall (2) at least the ferromagnetic layer (6) is covered.

5. Cooking vessel according to one of Claims 1 to 4, characterised in that the inner wall (1) is welded, soldered or bonded to the outer wall (2) along the rim (4).

6. Cooking vessel according to one of Claims 1 to 5, characterised in that the wall thickness of each of the two said layers (5, 7) of rust-proof material of the outer wall is at most 0.2 mm.

7. Cooking vessel according to one of Claims 1 to 6, characterised in that means (12) for the releasable connection to a heat-insulating base are provided on the bottom.

8. Cooking vessel according to one of Claims 1 to 7, characterised in that, in the lower portion of the vertical part, the outer wall (2) has a continuous contraction (12) for the clamp fastening of a base (13) providing heat insulation.

9. Cooking vessel according to one of Claims 1 to 8, characterised in that the inner wall (21) of the lid (20) is curved convexly towards the centre (23) from the part (22) resting on the recessed annular surface (11) of the pot.

10. Cooking vessel according to Claim 1 or 2, characterised in that the end face on the rim part is covered by a sleeve (14) of rust-proof material.

11. Cooking vessel according to one of Claims 1 to 8, characterised by a heat-insulating base provided with permanent magnets for mounting to the vessel by means of magnetic forces.

## Revendications

1. Récipient de cuisson, destiné notamment à être utilisé sur des plaques à induction pour cuire, pour conserver chaud et pour servir, comprenant un pot ayant une paroi intérieure (1) et une paroi extérieure (2) constituées chacune de coquilles continues, reliées entre elles de manière étanche aux gaz, à distance l'une de l'autre dans leurs parties verticales et entre les parties de fond desquelles est prévue une plaque (3) conductrice de la chaleur et reliée aux deux coquilles de manière à conduire la chaleur, et un couvercle (20) également à double paroi, récipient de cuisson dans lequel le pot et le couvercle (20) ont un épaulement dans la zone de contact et sont munis, d'une part, d'une surface annulaire (11) abaissée dans la paroi intérieure (1) et d'une surface d'appui (22) du couvercle (20) qui est complémentaire pour l'insertion du couvercle (20) dans le pot et, d'autre part, d'un bord (4) élargi tout autour pour stabiliser la forme de la surface annulaire, caractérisé en ce qu'au moins la paroi extérieure (2) du pot est en un matériau composite, dont au moins une couche intérieure (6) est en un matériau ferromagnétique, et en ce que la paroi intérieure (1) et la paroi extérieure (2) du pot comportent des bords (4) élargis et appliqués l'un contre l'autre, par lesquels elles sont reliées l'une à l'autre de manière étanche aux gaz.

2. Récipient de cuisson suivant la revendication 1, caractérisé en ce que le matériau composite est constitué de trois couches et le matériau ferromagnétique de la couche du milieu est recouvert, des deux côtés, d'une couche (5, 7) en matériau inoxydable.

3. Pot de cuisson suivant la revendication 1 ou 2, caractérisé en ce que le bord supérieur (4) de la paroi intérieure (1) est serti sur la surface frontale de la paroi extérieure (2).

4. Récipient de cuisson suivant la revendication 1 ou 2, caractérisé en ce que la paroi intérieure (1) est à affleurement le long du bord (4) avec la paroi extérieure (2), en ce que la paroi intérieure (1) est reliée par un revêtement (13) obtenu par électrolyse à la paroi extérieure (2), et en ce que, pour cette dernière, au moins la couche ferromagnétique (6) est recouverte.

5. Récipient de cuisson suivant l'une des revendications 1 à 4, caractérisé en ce que la paroi intérieure (1) est soudée, brasée, ou collée à la paroi extérieure (2), le long du bord (4).

6. Récipient de cuisson suivant l'une des revendications 1 à 5, caractérisé en ce que l'épaisseur de paroi de chacune des deux dites couches (5, 7) de la paroi extérieure en matériau inoxydable est au plus de 0,2 mm.

7. Récipient de cuisson suivant l'une des revendications 1 à 6, caractérisé en ce qu'il est prévu sur le fond des moyens (12) de liaison amovible à un support isolant thermiquement.

8. Récipient de cuisson suivant l'une des revendications 1 à 7, caractérisé en ce que la paroi extérieure (2) comporte, dans la région inférieure de la partie verticale, une gorge (12) faisant tout le tour et destinée à la fixation avec serrage d'un support (13) formant une isolation thermique.

9. Récipient de cuisson suivant l'une des revendications 1 à 8, caractérisé en ce que la paroi intérieure (21) du couvercle (20) est incurvée de manière convexe vers le centre (23), depuis la partie d'appui (22) jusqu'à la surface annulaire (11) abaissée du pot.

10. Récipient de cuisson suivant la revendication 1 ou 2, caractérisé en ce que la partie marginale du côté frontal est recouverte d'une manchette (14) en matériau inoxydable.

11. Récipient de cuisson suivant l'une des revendications 1 à 8, caractérisé par un support thermiquement isolant et muni d'aimants permanents pour la fixation au récipient au moyen de forces magnétiques.

**Fig.1**

24

20

25

26

21

22

23

**Fig.2**

4

10

11

1

2

3

12

**Fig.3**

30

# Fig. 2

Fig. 3

**Fig. 4**

Fig. 5